# EUROPEAN PATENT APPLICATION

(11) **EP 0 522 637 A2**
(43) Date of publication of application: **13.01.1993**
(21) Application number: 92201994.8
(22) Date of filing: 02.07.1992
(51) Int. Cl.: G02F 1/01, G02F 1/37, G02B 6/12

(54) **Planar optical element**

(30) Priority: 10.07.1991 EP 91201797
(71) Applicant: Philips Electronics N.V., 5621 BA Eindhoven (NL)
(72) Inventor: Venhuizen, Antonius Henricus Johannes, NL-5656 AA Eindhoven (NL); Rikken, Gerardus Ladislaus Johannes Andreas, NL-5656 AA Eindhoven (NL)
(74) Representative: Faessen, Louis Marie Hubertus

(57) **Abstract**

The invention relates to a planar optical element comprising a light-conducting layer 10 on a supporting material 11 having a refractive index which is lower than that of the light-conducting layer, which light-conducting layer comprises one or more waveguide channels 13. The waveguide channels are laterally delimited by metal layers 14,15 which extend on either side of each waveguide channel, which metal layers are located between the supporting material and the light-conducting layer and directly contact said light-conducting layer. Preferably, the metal layers are provided in the form of electrodes, such that an electric field can be applied transversely across one or more waveguide channels. Such a planar optical element can be used, for example, as an optical switch and in a device for doubling the frequency of a lightwave.

## Description

The invention relates to a planar optical element comprising a light-conducting layer on a supporting material having a refractive index which is lower than that of the light-conducting layer, said light-conducting layer comprising one or more waveguide channels.

The invention also relates to a device for doubling the frequency of a lightwave, in which device a fundamental lightwave is guided through a waveguide channel in a light-conducting layer while forming a second harmonic wave, which light-conducting layer is provided on a supporting material having a refractive index which is lower than that of the light-conducting layer, said light-conducting layer consisting of a nonlinear optical medium.

Planar optical elements are used, for example, as optical switches, for modulating light, and in the form of an integrated optical device having electrical and optical elements. A device according to the invention can be used, for example, in combination with a semiconductor laser light source generating red light, as a compact blue light source for the optical storage of information, for telecommunication and for laser printers. By virtue of the use of shortwave light, the information density can be increased and the possibilities of writing and erasing information are extended as a result of the increased photon energy.

A planar optical element as mentioned above is described by J.I. Thackara et. al. in Appl. Phys. Lett. 52 (13), pp. 1031 to 1033 (1988), in which publication it is used, for example, as a light-modulating device. According to a first variant ("vertical geometry"), a substrate is provided with a continuous, homogeneous light-conducting layer, for example a layer of a synthetic resin having nonlinear optical properties, between two cladding layers having a lower refractive index than the light-conducting layer. There are no specific means of laterally delimiting the waveguide channels. The light-conducting layer is uninterrupted and has a homogeneous composition. The light-conducting layer and the cladding layers are arranged between electrodes which are in the form of thin layers, enabling an electric field to be applied perpendicularly to the layers. Such an electric field contributes to the lateral delimitation of a waveguide channel because in the materials used the refractive index is governed by the locally present electric field, which field brings about a permanent birefringence. Such a device is also described in United States Patent Specification US 4,877,298. According to a second variant ("transverse geometry") in the above-mentioned publication by J.I. Thackara et. al., the electrodes are juxtaposed in one plane, between the substrate and a cladding layer. In this case, the cladding layer on the outside of the planar optical element can be dispensed with. Such planar optical elements can be manufactured comparatively easily because only the electrode layers have to be provided in accordance with a pattern and the light-conducting layer does not have to be structured to form waveguide channels.

A disadvantage of the known planar optical elements is the absence of lateral delimitation of the waveguide channels when no electric field is applied. Besides, such a delimitation is possible only when light-conducting materials are used whose refractive index is governed sufficiently and correctly by the applied electric field.

It is an object of the invention to provide, *inter alia,* a planar optical element and a device for doubling the frequency of a lightwave, in which waveguide channels are used which are laterally delimited, even when no electric field is applied, without this requiring the light-conducting layer to be structured. As this permits an electric field to be switched on and off according to the requirements, the range of applications of such planar optical elements is extended. In this connection, the invention aims at providing a planar optical element in which, if desired, a material having no nonlinear optical properties can he used in the light-conducting layer. It is an object of the invention to provide a device which can be manufactured in a simple manner, for example, by means of a construction in which the cladding layers can be dispensed with. A further object of the invention is to provide a device which can be fabricated in a simple manner by a laser light source, for example a semiconductor laser light source.

These objects are achieved by providing a planar optical element as described in the opening paragraph, which element is characterized according to the invention in that the waveguide channels are laterally delimited by metal layers extending on either side of each waveguide channel, which metal layers are located between the supporting material and the light-conducting layer and directly contact the light-conducting layer.

Substrate materials which are known *per se,* whether or not provided with a buffer layer or a cladding layer, can be used as the supporting material. Only the layer which directly contacts the light-conducting layer must have a refractive index which is lower than that of the light-conducting layer.

In a preferred embodiment of the planar optical element according to the invention, the metal layers are made of silver. Such layers have a suitable reflective effect and are very effective in the device according to the invention.

If desired, the light-conducting layer consists of a nonlinear optical medium which can be used, for example, as an optical switch or for frequency doubling. In that case, in order to be able to orient the molecules in the nonlinear optical medium, the metal layers are efficaciously provided in the form of electrodes, such that an electric field can be applied transversely across one or more waveguide channels.

For the protection of the planar optical element, the light-conducting layer may be coated with a protective layer having a refractive index which is lower than that of the light-conducting layer.

The object of providing a device for doubling the frequency of a lightwave is achieved by a device as described in the opening paragraph, in which device, according to the invention, the waveguide channel is laterally delimited by metal layers extending on either side of the waveguide channel, which metal layers are located between the supporting material and the light-conducting layer and directly contact said light-conducting layer.

The invention is based on the application of the phenomenon that a lightwave which travels through the light-conducting layer experiences a lower effective refractive index at the location of an underlying metal layer. At such locations, a comparatively larger part of the lightwave travels through the medium adjoining the opposite side. In the planar optical element and in the device according to the invention, this medium (air or, if desired, a protective layer having a low refractive index) has a lower refractive index than the light-conducting layer. When this mechanism is applied, the light-conducting layer can be a continuous, homogeneous, structureless layer which, hence, can be manufactured in a simple manner. If desired, a light-conducting layer having a spatially periodic modulation of linear optical and nonlinear optical properties can be used according to methods which are known *per se*.

Influencing the effective refractive index by metal layers is known *per se*, see a publication by Y. Yamamoto et. al. in Applied Optics 14 (2), pp. 322 to 326 (1975). In said publication, however, the necessary metal layers are provided on the outside, so that at such locations the lightwave partly travels through a buffer layer between the light-conducting layer and the substrate, which is less effective to decrease the effective refractive index than transport through air. The optical device described by Y. Yamamoto et. al. comprises no materials having nonlinear optical properties, and there is no possibility of orienting the molecules in the light-conducting material by means of an electric field.

The invention will be explained in greater detail by means of exemplary embodiments and with reference to the accompanying drawing, in which
Fig. 1 is a cross-sectional view of a planar optical element according to the invention, and
Fig. 2 is a diagrammatic representation of a device for doubling the frequency of a lightwave.

### Exemplary embodiment 1.

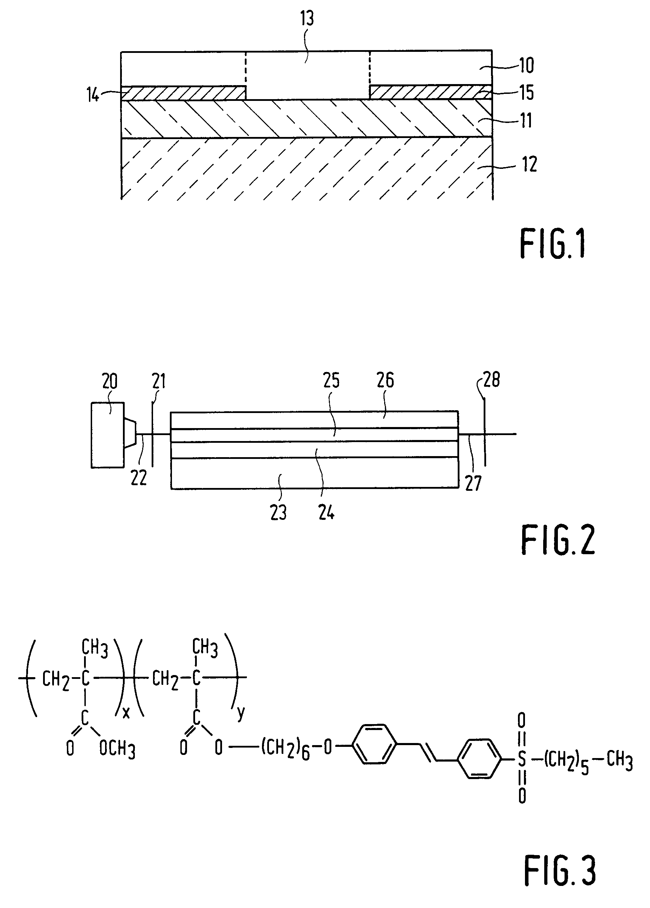

Fig. 1 is a diagrammatic cross-sectional view of a planar optical element according to the invention, comprising a light-conducting layer 10 on a supporting material having a refractive index which is lower than that of the light-conducting layer. As the supporting material, a suitable substrate having the desired properties can be selected or, as shown in this Figure, a supporting layer 11 provided on a substrate 12 can be used. To preclude extinction of the light to be conducted, it is desirable for the substrate, or at least the supporting layer 11, to be optically transparent. In the Figure, a waveguide channel 13 is shown in cross-section in the light-conducting layer 10, which channel is laterally delimited by metal layers 14, 15 extending on either side of the waveguide channel.

For example glass can be used as the substrate. According to the exemplary embodiment, a disc 12 of silicon with an approximately 3 µm thick supporting layer 11 of (transparent) silicon oxide were used. Alternatively, other materials such as GaAs and other semiconductor materials can be used as the substrate, which makes it possible to integrate the optical device with an electrical device and/or a semiconductor laser light source.

Glass, a synthetic resin or an inorganic nonlinear optical material, for example lithium niobate or potassium titanylphosphate, can be used as the light-conducting layer 10. According to the exemplary embodiment, a layer of polymethyl methacrylate having a thickness of 2.0 µm was used. Such a layer exhibits no nonlinear optical properties. According to the exemplary embodiment, the layer thickness can be selected in the range between 0.5 and 5 µm. Other suitable materials for a light-conducting layer are described in, *inter alia*, United States Patent Specification US 4,877,298 and in the above-mentioned publication by J.I. Thackara et. al.

According to the example, the metal layers 14, 15 were made of silver, and, if desired, an adhesive layer of chromium (having a thickness of approximately 10 nm) can be provided between the supporting layer 11 and the silver layer. Other materials such as gold, copper and aluminium can also suitably be used in the optical device. Preferably, the metal layers have a small thickness, according to the example 20 nm, to simplify the application of a flat light-conducting layer. According to the exemplary embodiment, the width of the waveguide channels was 2 µm but may be adapted by those skilled in the art to the demands imposed by the optical device to be manufactured.

A planar optical element as described above was manufactured in the following manner. A surface of a silicon disc, cut according to the (100) crystal plane, was provided with a 3.4 µm thick layer of silicon oxide by heating the silicon disc for 25 hours at a temperature of 1100°C. By means of vacuum evaporation, a 20 nm thick layer of silver was applied in which a desired pattern was provided by a photolithographic method which is known *per se*, which pattern corresponds to the waveguide channels to be manufactured and to the possible use of silver tracks as electrodes. A layer of polymethyl methacrylate (average molecular weight 10⁵) was applied by spinning from a solution in chlorobenzene. The planar optical element was provided with suitable entrance and exit windows for light by cleaving the silicon disc according to the (111) crystal planes.

At a wavelength of 820 nm, it was found that the effective refractive index in the light-conducing layer above quartz and silicon oxide is 1.4767, whereas the effective refractive index above silver, gold, aluminium, copper and/or chromium is 1.4727. This difference suffices to delimit a usable waveguide channel.

### Exemplary embodiment 2.

Fig. 2 is a diagrammatic cross-sectional view of a device for doubling the frequency of a lightwave, comprising a semiconductor laser light source 20 which can be used to generate a light ray 22, for example red or infrared light, which light ray is coupled into a waveguide channel in a planar optical element *via* a lens 21. The planar optical element used comprises a substrate 23 having a supporting layer 24, a light-conducting layer 25 and, if desired, a protective layer 26. The planar optical element comprises metal layers (not shown in the Figure) which delimit a waveguide channel in the light-conducting layer 25, as described in exemplary embodiment 1. The outgoing light ray 27 contains a quantity of light, for example blue light, the frequency of which has doubled relative to the ingoing light ray. If desired, the red light can be obstructed at the location of the outgoing light ray by means of a colour filter 28.

According to the example, the substrate 23 and the supporting layer 24 consisted of a silicon disc with a layer of silicon oxide, as described in exemplary embodiment 1. The light-conducting layer 25 having a thickness of 1.6 µm was manufactured from a nonlinear optical material consisting of a polymer material, the composition of which is shown in Fig. 3, in which the molar fractions x and y are both equal to 0.5 and in which the average molecular weight is approximately 15,000. Said polymer material, and other suitable polymer materials as well as the manufacture thereof, are described in United States Patent Specification US 5006729. At a wavelength of 820 nm and in the absence of a protective coating 26, it was found that the effective refractive index in the light-conducting layer above silicon oxide is 1.497, whereas the effective refractive index above silver is 1.492. According to the invention, for example, the supporting layer 24 and the protective layer 26 may consist of polymethyl methacrylate and the substrate may consist of glass.

If required, the effectiveness of the device can be increased by orienting the molecules of the nonlinear optical material in the waveguide channel by applying an electric field transversely across the channel, for which purpose the metal layers on either side of the channel can be used. In this case, the incident light must be polarized in the plane of the light-conducting layer. Since, in general, a semiconductor laser light source generates light which is polarized in the plane of a laser layer, in the present case, the use of a λ/2 element to rotate the plane of polarization can be dispensed with, thereby enabling a semiconductor laser light source and a planar optical element to be integrated on a single substrate in a simple manner.

Instead of coupling-in light by means of cleaved entrance and exit faces, it is alternatively possible to couple light into the light-conducting layer by means of prisms in a manner which is know*n per se*. An element having low optical losses can be obtained by providing the substrate and the supporting layer with a raised portion between the metal layers (having a height up to 250 nm), at the location of the waveguide channel.

## Claims

1. A planar optical element comprising a light-conducting layer on a supporting material having a refractive index which is lower than that of the light-conducting layer, said light-conducting layer comprising one or more waveguide channels, characterized in that the waveguide channels are laterally delimited by metal layers extending on either side of each waveguide channel, which metal layers are located between the supporting material and the light-conducting layer and directly contact said light-conducting layer.

2. A planar optical element as claimed in Claim 1, characterized in that the metal layers are made of silver.

3. A planar optical element as claimed in Claim 1 or 2, characterized in that the light-conducting layer consists of a nonlinear optical medium.

4. A planar optical element as claimed in Claim 3, characterized in that the metal layers are provided in the form of electrodes, such that an electric field can be applied transversely across one or more waveguide channels.

5. A planar optical element as claimed in Claim 1, characterized in that the light-conducting layer is coated with a protective layer having a refractive index which is lower than that of the light-conducting layer.

6. A device for doubling the frequency of a lightwave, in which device a fundamental lightwave is guided through a waveguide channel in a light-conducting layer while forming a second harmonic wave, which light-conducting layer is provided on a supporting material having a refractive index which is lower than that of the light-conducting layer, said light-conducting layer consisting of a nonlinear optical medium, characterized in that the waveguide channel is laterally delimited by metal layers extending on either side of the waveguide channel, which metal layers are located between the supporting material and the light-conducting layer and directly contact said light-conducting layer.
